# FASCICULE DE BREVET EUROPEEN

(11) **EP 2 880 407 B1**
(45) Date de publication et mention de la délivrance du brevet: **26.01.2022**
(21) Numéro de dépôt: 13744725.6
(22) Date de dépôt: 10.07.2013
(51) Int. Cl.: G01F 1/66, G01D 4/00, G01F 15/06

(54) **SYSTÈME POUR L'ESTIMATION DE LA CONSOMMATION D'EAU INDIVIDUELLE**
SYSTEM ZUR ABSCHÄTZUNG DER INDIVIDUELLEN WASSERVERBRAUCHS
SYSTEM FOR ESTIMATING THE INDIVIDUAL WATER USE

(30) Priorité: 30.07.2012 FR 1257350
(43) Date de publication de la demande: 10.06.2015
(73) Titulaire: Oxeau Invest, 33000 Bordeaux (FR)
(72) Inventeur: LE FLOC'H, Jacques, F-16210 Saint-Romain (FR)
(74) Mandataire: IP Trust
(86) Numéro de dépôt international: PCT/FR2013/051654
(87) Numéro de publication internationale: WO 2014/020252

(56) Documents cités:
- EP-A- 0 036 658
- WO-A2-2006/110600
- GB-A- 2 082 324
- JP-A- 2006 047 243
- US-A- 6 161 100
- US-A1- 2006 225 514
- US-A1- 2007 044 572

## Description

### Domaine de l'invention

La présente invention concerne le domaine de la métrologie et plus précisément de l'analyse et la caractérisation de la consommation de tout fluide circulant dans une canalisation. Le fluide retenu pour l'illustration d'un exemple de mise en oeuvre de l'invention est l'eau ou un liquide.

Afin de mesurer et gérer au mieux la consommation d'eau d'un immeuble d'habitation ou industriel, ou encore d'un réseau de distribution agricole ou industriel, il est nécessaire de connaître la consommation spécifique des équipements alimentés par le réseau. La solution la plus évidente consiste à associer à chacun des équipements un compteur individuel dont les données permettent de réaliser une cartographie dynamique et d'agir en fonction des données individuelles fournies par ces compteurs.

### Etat de la technique

On connaît aussi dans l'état de la technique des solutions pour l'analyse globale de la consommation d'eau.

La demande de brevet américain US20040128034 décrit une solution d'analyse de l'écoulement de liquide utilisant un microphone ou un détecteur acoustique autre pour détecter la signature acoustique d'écoulement de liquide à travers un tuyau par l'analyse de la signature acoustique de l'eau ou un liquide s'écoulant à travers un tuyau.

Sur la base de l'analyse de la signature acoustique de l'écoulement de liquide, une détermination est faite si une fuite dans la ligne s'est produite.

Si une détermination est faite qu'une panne s'est produite, une vanne d'arrêt d'eau est activée cessant l'écoulement de l'eau ou autre liquide. Le système comprend en outre des dispositifs d'avertissement sonores et visuels indiquant si une erreur s'est produite, ainsi que l'état du système général. Le système est configuré pour commander la conduite d'eau débouchant dans un bâtiment où il est configuré pour commander l'eau débouchant dans un tuyau ou un appareil spécifique, tel que les toilettes ou la machine à laver. Le système utilise un ordinateur pour analyser les signatures acoustiques détectables dans la maison et peut déterminer si l'une de ces signatures a été produite pour une période de temps à l'extérieur d'une limite acceptable et de déterminer qu'une erreur s'est produite.

On connaît aussi la demande de brevet américain US2012/0116693 décrivant un procédé de mesure totale de la consommation d'eau dans un bâtiment à unités multiples.

Chaque unité comprend plusieurs appareils d'usage d'eau. Un capteur peut être placé sur les appareils. Le capteur peut être un capteur acoustique, par exemple un microphone. Le capteur peut détecter l'ouverture et la fermeture de l'usage de l'eau ou le niveau d'usage de l'eau.

La corrélation entre la consommation d'eau et la pression acoustique et/ou la distribution spectrale du son de la conduite d'eau de l'unité et/ou de l'appareil peut être calibrée pour chaque appareil. Une unité de processeur, reçoit via un réseau câblé ou sans fil la mesure de l'utilisation totale et les données de surveillance des capteurs et les met en corrélation, pour générer des données corrélées pour produire des données pour la mesure de la consommation individuelle relatives aux périodes de consommation de l'eau. L'unité de processeur est intégrée avec le compteur du tuyau d'alimentation principale ou se trouve hors du bâtiment.

La demande de brevet américain US2006/0009928 décrit l'application de signatures spécifiques de consommation pour la caractérisation d'appareils ou la détection des anomalies dans des appareils, utilisée pour améliorer l'efficience d'utilisation d'eau. Les données de mesure du débit d'eau pendant l'utilisation des appareils sont transmises à un microprocesseur qui est une partie intégrale d'un PC ou à un microprocesseur séparé, comportant des moyens pour informer un contrôleur du débit d'eau.

Le brevet américain US5040409 décrit l'utilisation d'un capteur acoustique pour détecter des fuites dans un système d'arrosage. Le capteur détecte les signaux ayant une fréquence différente générée par l'écoulement normal ou par les fuites du fluide dans les tuyaux.

Le brevet américain US 3500676 décrit une méthode et un dispositif de détection de fuites ayant une fréquence sonore différente utilisant un transducteur comportant un composant du type accéléromètre consistant en disques piézoélectriques.

La demande de brevet américain US 2003/0052790 décrit un système et une méthode pour la communication de l'information entre un compteur d'eau et un ordinateur personnel ou une compagnie externe.

Le brevet européen EP1887327 décrit un compteur à ultrasons comportant un tuyau d'écoulement d'eau, un capteur piézoélectrique, un processeur, une mémoire et une interface de liaison à un dispositif externe.

La demande internationale PCT WO2011/049957 décrit la conception d'un appareil récepteur transmetteur de données pour un compteur d'eau du type AMR ou AMI comportant comme dispositif de stockage de programme une carte mémoire et comme interface un dispositif externe avec port USB.

### Inconvénients de l'art antérieur

Les solutions de l'art antérieur présentent plusieurs inconvénients.

En premier lieu, ils nécessitent tous la mise en place à l'intérieur du circuit de distribution d'eau d'un équipement additionnel. Cela implique l'interruption de l'alimentation de l'eau, une intervention majeure sur la canalisation ou le circuit de distribution, et la perturbation au moins temporaire du réseau.

En second lieu, les solutions de l'art antérieur ne fournissent pas réellement une information de caractérisation individuelle des équipements consommateurs d'eau, mais plutôt une information sur la consommation d'un sous-ensemble, tel qu'une salle de bain ou une cuisine.

### Autres solutions de l'art antérieur

On connaît également dans l'art antérieur des solutions appartenant à l'arrière plan technologique :
Le brevet américain US6161100 décrit un système où chacun des équipements de consommation est équipé d'un compteur individuel. C'est précisément la solution que l'invention vise à éviter.

La demande de brevet internationale WO2006/110600 s'inscrit dans la même finalité que le document D1, et propose un équipement (un robinet) muni d'un capteur individuel.

Le brevet européen EP036658 décrit également un débitmètre ultrasonore. Il s'agit d'un capteur comportant deux transducteurs ultrasonores :
- Le premier émettant un front d'onde selon une direction déterminée par rapport au flux circulant dans le conduit
- Le second détectant l'onde diffusée après l'interaction entre le front d'onde susvisé et le fluide circulant dans le conduit, pour fournir un signal représentatif de la vitesse du fluide dans le conduit.

Cette solution de l'art antérieur n'enseigne ni l'objectif de capteur unique pour caractériser des consommations d'une pluralité d'équipements de consommation, ni le mode d'acquisition des signaux, permettant de caractériser à partir d'une information unique, des consommations spécifiques.

La demande de brevet japonais JP 2006-047243 relève du même domaine technique que le document précédent, à savoir les débitmètres ultrasonores et non pas la caractérisation d'une pluralité d'équipements par l'analyse des signaux à l'aide d'un capteur électromécanique.

Il précise une solution de pince facilement déplaçable sur des conduits pour assurer des mesures rapides sur une installation.

La demande de brevet américain US2006/0225514 décrit un système de mesure de paramètres de l'écoulement d'un fluide dans un conduit.

Le brevet européen GB2082324A décrit un équipement de surveillance du fonctionnement d'un système d'écoulement de fluide comprend un microphone destiné à être fixé à un conduit du système pour détecter le spectre de bruit produit par le fonctionnement du système, par exemple par l'écoulement du fluide et par fonctionnement d'une pompe et du moteur associé. Les signaux de bruit du microphone sont transmis à une unité de micro-processeur qui commande une unité d'affichage visuel de sorte que l'unité de visualisation affiche le spectre reçu.

Des données de référence relatives aux spectres de bruits normaux et anormaux qui peuvent se produire dans le système sont enregistrées en mémoire. Ces données stockées peuvent commander la fermeture du moteur et / ou déclencher une alarme en cas de situation dangereuse.

Ce document ne concerne pas la caractérisation de la consommation individuelle d'une pluralité d'équipements à partir d'un signal acquis en un point unique d'un réseau.

La demande de brevet américain US 20070044572 concerne un appareil pour mesurer la vitesse d'un fluide passant à travers un tuyau est prévu. L'appareil comprend un réseau spatial de capteurs comportant au moins deux capteurs disposés à différents emplacements axiaux le long du tuyau, dans lequel les capteurs fournissent au moins un signal indicatif d'un paramètre stochastique associé à une caractéristique du fluide, dans lequel la caractéristique comprend au moins un de la température instable, la densité, la cohérence, la transparence, la conductivité, la capacité, la résistivité et l'inductance. Un processeur de signal est également prévu, dans lequel le processeur de signal est configuré pour recevoir le au moins un signal et déterminer la vitesse du fluide en utilisant le au moins un signal.

Le capteur est introduit dans le conduit pour le pilotage d'une installation industriel, afin de réguler le débit d'un équipement unique.

### Solution apportée par l'invention

La solution apportée par la présente invention concerne un système et un procédé de caractérisation et d'estimation de la consommation individuelle d'une pluralité d'équipements alimentés par un même réseau, de manière non invasive, évitant toute intervention sur le circuit de distribution d'eau.

La solution permettant également, par conséquent, de commander automatiquement une série d'appareils en proportion de l'estimation de la consommation évaluée spécifiquement. Ceci afin de réguler ou interrompre le flux sur tel ou tel circuit et pour tel ou tel appareil concerné.

A cet effet, l'invention concerne, selon son acception la plus générale, un système pour l'estimation de la consommation d'eau individuelle d'une pluralité d'équipements alimentés par le réseau secondaire de distribution d'eau d'un utilisateur, caractérisé en ce qu'il comprend un manchon apte à être monté autour de la canalisation d'alimentation dudit réseau secondaire et comprenant un capteur électromécanique appliqué contre la paroi extérieure de ladite canalisation d'alimentation, ainsi qu'un calculateur pour l'analyse des signaux recueillis par ledit capteur électromécanique en vue de l'extraction d'une information de caractérisation de la consommation individuelle desdits équipements alimentés par ledit réseau secondaire.

Le système ne comprend pas de source d'émission d'une onde de référence, et la mesure ne porte pas sur l'interaction entre un front d'onde de référence et le fluide circulant dans le conduit. Le capteur est passif, et l'analyse porte sur le signal fournit par ce capteur et non pas sur le signal de modulation résultant de l'interaction entre une onde de référence (onde porteuse) et le fluide circulant.

L'analyse des signaux globaux pour extraire une série d'informations individuelles est réalisée selon des techniques connues de l'homme du métier, par exemple par un traitement par réseaux de neurones des signatures, par un procédé basé sur des modèles de Markov cachés, notamment selon la techniques des « K plus proches voisins », ou encore par des modèles probabilistes tels que des réseaux bayésiens.

Selon une première variante, ledit manchon comprend un moyen de transmission à distance des signaux délivrés par le capteur électromécanique.

Selon une deuxième variante, non exclusive, ledit manchon comprend en outre un circuit électronique de prétraitement des signaux délivrés par le capteur électromécanique.

De préférence, ledit calculateur est associé à une mémoire pour l'enregistrement d'une bibliothèque de signatures de consommation d'une partie au moins des équipements individuels.

De préférence, ledit calculateur est programmé pour réaliser un traitement d'estimation et de classification à partir des signaux fournis par ledit capteur électromécanique.

Selon une première variante, ledit capteur électromécanique est constitué par un capteur accéléromètre MEMS.

Selon une deuxième variante, ledit capteur électromécanique est constitué par un capteur piézoélectrique.

Selon une troisième variante, ledit capteur électromécanique est constitué par un microphone électrets.

Selon une quatrième variante, ledit capteur électromécanique est constitué par un microphone MEMS.

L'invention s'étend plus largement à toutes autres variantes utilisant un capteur électromécanique permettant de capter les ondes produites par les variations de flux d'un liquide dans une canalisation.

Selon une variante de mise en œuvre, le système comporte en outre au moins une vanne commandant l'alimentation d'au moins un desdits équipements en fonction de ladite information de caractérisation de la consommation individuelle d'une partie au moins des équipements

Le manchon pour l'acquisition des signaux en vue de l'estimation de la consommation d'eau individuelle d'une pluralité d'équipements est constitué par deux demi-coques tubulaires, reliées par une articulation permettant son ouverture en vue de l'insertion autour d'une canalisation, et sa fermeture en vue de l'application dudit capteur contre la paroi de ladite canalisation.

Avantageusement, ledit manchon comporte un moyen d'ajustement de la pression d'appui du capteur sur la paroi extérieure du conduit d'alimentation.

L'invention concerne également un procédé d'estimation de la consommation d'eau, ou de tout fluide, d'une pluralité d'équipements mise en oeuvre par le système susvisé.

L'invention concerne encore un procédé de mise à jour du logiciel intégré par carte mémoire type SD ou tous types de mémoires encapsulées.

L'invention concerne notamment un programme d'ordinateur pour la mise en oeuvre d'un système conforme à l'invention susvisée pour commander un calculateur pour l'analyse des signaux recueillis par un capteur électromécanique en vue de l'extraction d'une information de caractérisation de la consommation individuelle des équipements alimentés par un réseau secondaire.

### Description détaillée d'un exemple non limitatif de réalisation

L'invention sera mieux comprise à la lecture de la description détaillée qui suit, concernant un exemple non limitatif de réalisation se référant aux dessins annexés où :
- La figure 1 représente une vue en perspective d'un manchon selon l'invention
- les figures 2 à 5 représentent les signaux détectés par différents types de capteurs
- les figures 6 et 7 représentent deux autres types de signaux détectés par un accéléromètre.

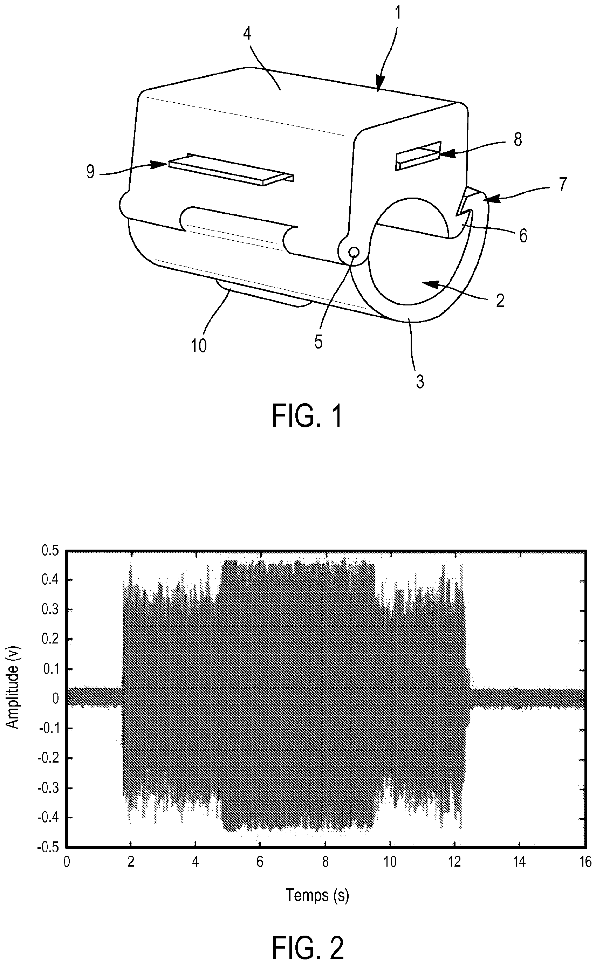

La figure 1 représente une vue d'un manchon selon l'invention, formé par un boîtier (1) en matière plastique traversé longitudinalement par un orifice cylindrique (2) dont la section est complémentaire de la section d'une canalisation d'alimentation en eau.

Le manchon (1) est formé de deux parties (3, 4) reliées par une articulation (5). Chacun des parties (3, 4) présente une paroi intérieure semi-tubulaire, ainsi qu'un béquet de verrouillage respectivement (6, 7).

Plus précisément, la première partie (3) présente une forme de tuile ou de gouttière semi-tubulaire, avec un rayon croissant depuis l'articulation (5) jusqu'au bord opposé.

Elle présente une zone d'articulation le long de l'un des bords longitudinaux pour former avec la deuxième partie (4) une charnière. L'autre bord longitudinal présente un épaulement (7) s'étendant radialement vers l'intérieur de la partie (3). Le rayon de courbure intérieure de la première partie (3) mesuré au niveau du béquet (7) correspond au rayon de courbure extérieur de la deuxième partie (4) mesuré au niveau du béquet complémentaire (6) formant un épaulement apte à venir en liaison avec l'épaulement du premier béquet (7).

Le béquet (7) présente un bord longitudinal chanfreiné, du coté opposé à l'épaulement, pour permettre l'introduction d'une lame lors du démontage du collier.

Le manchon peut s'ouvrir pour permettre l'ajustement sur une canalisation d'alimentation en eau, sans nécessiter la coupure ni aucune autre intervention sur cette dernière.

Lorsque le manchon (1) est positionné autour de la canalisation d'alimentation en eau, les deux parties (3, 4) sont refermées et verrouillées pour entourer la canalisation, les surfaces semi-tubulaires des deux parties venant en contact avec la surface extérieure de la canalisation.

L'une des parties (4) renferme un circuit électronique pour la réalisation d'un prétraitement des signaux qui sont transmis à un calculateur distant par une liaison à distance filaire ou radiofréquence, par exemple selon le standard WIFI. Ces signaux sont également enregistrés dans une mémoire locale permettant une relève à partir d'un équipement par l'intermédiaire d'une prise USB (8) ou à l'aide d'une carte mémoire (9) de type SIM par exemple.

Dans l'exemple décrit, la deuxième partie (4) intègre un capteur vibratoire ou acoustique qui peut être pressé contre la paroi de la canalisation par la fermeture et le clipsage des deux parties complémentaires (3, 4).

Un organe d'ajustement (10) est constitué, à titre d'exemple, par un système comprenant une vis de réglage interagissant avec un filetage prévu dans la paroi de la première partie (3). Cette vis agit sur un berceau placé à l'intérieur de la première partie (3) afin d'adapter la section définie par ce berceau d'une part et la deuxième partie (4) d'autre part, à la section du conduit.

Les paramètres physiques mesurés sur le tuyau d'arrivée d'eau sont choisis parmi les suivants la forme d'onde acoustique, la déformation ou les phénomènes vibratoires, de manière passive et non pas par émission d'un front d'onde modulé par la circulation du fluide dans le conduit.

Les paramètres n'incluent pas la mesure de l'interaction entre une onde incidente, par exemple un front d'ondes ultrasonores, et le liquide circulant dans le conduit. Les signaux mesurés ne sont pas ceux fournis par un débitmètre ultrasonore, basés sur la mesure de la modulation d'une onde porteuse ultrasonore par le débit d'un fluide. L'équipement ne comporte pas de source d'émission associée à une mesure de la modulation de cette source d'émission par la circulation du fluide.

Le capteur selon l'invention agit de manière passive, sur la détection des signaux intrinsèques émis par l'interaction du fluide avec le conduit, et non pas par analyse de la modulation d'une onde incidente de référence par le fluide circulant dans le conduit.

Le capteur est choisi parmi :
- les microphones condensateur,
- les microphones à électret, tels que le microphone commercialisé sous la référence POM-3044-R par la société PROJECTS UNLIMITED
- les microphones à technologie MEMS, tels que le microphone commercialisé sous la référence ADMP504 par la société ANALOG DEVICES
- les capteurs piézo-céramique, tels que le composant 27301 commercialisé par la société FERROPERM
- les jauges de contrainte résistives,
- les accéléromètres MEMS, tels que l'accéléromètre commercialisé sous la référence ADXL103 par la société ANALOG DEVICES

Les signaux délivrés par le capteur sont exploités par un calculateur commandé par un logiciel de classification automatique et de quantification des catégories reconnues selon des variables de temps, de fréquence, durée et/ou intensité. L'homme du métier connaît les méthodes générales de classification et d'estimation probabilistes, mettant en oeuvre des modèles bayésiens, des réseaux de neurones ou des modèles de Markow.

Les traitements réalisés pour la caractérisation individuelle consistent à enregistrer en premier lieu une bibliothèque de référence contenant la signature de chacun des équipements à superviser.

Ces enregistrements peuvent être prédéfinis, ou réalisés lors de la mise en route du système selon l'invention par l'enregistrement du signal transmis par le capteur lors de la mise en route et l'arrêt d'un équipement spécifique.

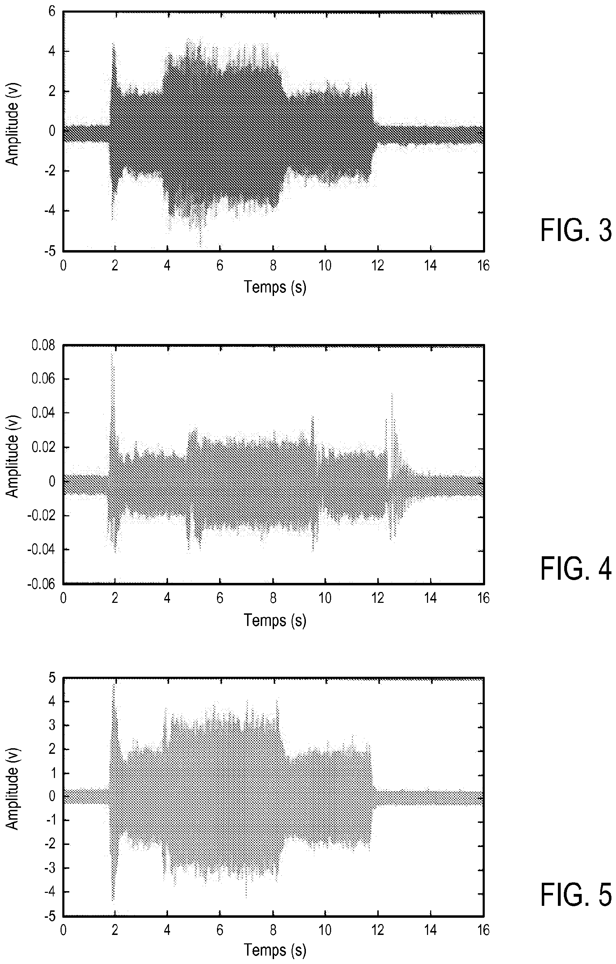

Les figures 2 à 5 représentent les signaux détectés par différents types de capteurs, respectivement :
- Un accéléromètre commercialisé sous la référence ADXL103 par la société ANALOG DEVICES (Figure 2)
- un capteur piézo-céramique commercialisé sous la référence 27301 commercialisé par la société FERROPERM (figure 3)
- un microphone électret commercialisé sous la référence POM-3044-R par la société PROJECTS UNLIMITED (figure 4)
- un microphone MEMS sous la référence ADMP504 par la société ANALOG DEVICES (Figure 5).

Les signaux exploités sont, dans cet exemple, l'amplitude en fonction du temps.

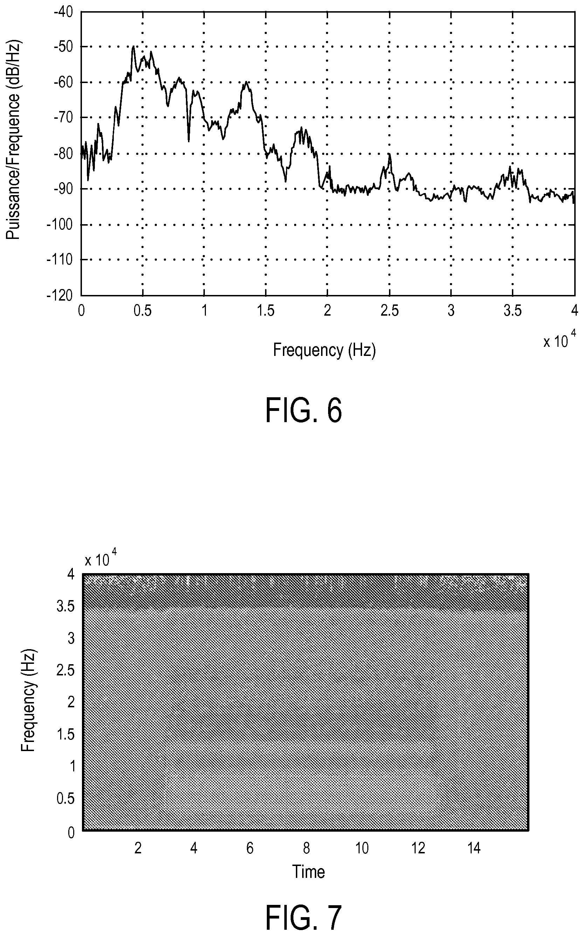

Les figures 6 et 7 représentent d'autres formes de signaux acquis avec un accéléromètre, à savoir :
- la puissance en fonction de la fréquence (figure 6)
- le spectrogramme (figure 7).

Ces signaux font l'objet d'un prétraitement consistant à échantillonner les signaux et le cas échéant à procéder à un filtrage pour éliminer les signaux parasites, par exemple les signaux sonores ambiants. A cet effet, le manchon peut comporter en outre un microphone pour capter les signaux sonores ambiants.

Le traitement appliqué aux signaux délivrés par le capteur vise à assigner des signaux ou des segments de signaux à des catégories ou classes.

La phase d'apprentissage comprend l'extraction à partir d'une base de signaux de référence de descripteurs sous forme de signatures numériques.

La classification des signaux délivrés par le capteur met en oeuvre la technique basée sur les modèles de Markov cachés (HMM - Hidden Markov Models), les modèles de mélange de gaussiennes (GMM Gaussian Mixture Models) ou l'alignement temporel dynamique (DTW - Dynamic Time Warping).

Un système de classification statistique modélise chaque classe de signaux par une variable aléatoire qui est souvent une distribution de Gauss. La classification statistique est le calcul de la vraisemblance d'appartenance du signal à chacune des classes possibles, ce qui permettra de déterminer la classe d'appartenance la plus probable. Le calcul utilise un paramétrage acoustique du signal et les modèles des classes à identifier.

Les modèles de mélange de distributions de Gauss (GMM) sont utilisés dans le cas de signaux complexes où il est nécessaire de considérer plus d'une variable aléatoire.

La classification de sons à l'aide d'un modèle GMM comprend deux étapes : une phase d'apprentissage du système sur un ensemble de fichiers supposés représentatifs d'une classe et, une deuxième phase, de vérification de l'appartenance d'un son quelconque à cette classe.

L'apprentissage a pour but d'estimer les paramètres des distributions de Gauss qui composent le modèle à partir des vecteurs acoustiques des sons composant la classe. L'apprentissage d'une classe se décompose en deux étapes successives : tout d'abord l'obtention de valeurs approximatives des paramètres des distributions de la classe par l'algorithme des K moyennes, ensuite l'optimisation des valeurs de ces paramètres par un algorithme de type EM (Expectation Maximisation). La phase de classification permet de déterminer la classe la plus probable à partir du calcul de la vraisemblance pour chaque vecteur acoustique du signal. La vraisemblance d'un son constitué d'une suite temporelle de plusieurs vecteurs est la moyenne géométrique des vraisemblances de chacun de ses vecteurs. La classe de sons d'appartenance est celle pour laquelle la valeur de vraisemblance moyenne est maximale.

Le système selon l'invention permet d'acquérir de manière très simple les informations sur l'ensemble des équipements alimentés par le réseau de distribution d'eau, sans qu'il ne soit nécessaire d'équiper chacun des équipements d'un capteur individuel.

Il peut comporter une ou plusieurs vannes commandées, associée chacune à un des équipements ou à un sous-ensemble d'équipements. Le pilotage de la vanne est assuré par l'exploitation des informations de caractérisation de la consommation individuelle.

Cette information déclenche le cycle de fonctionnement de l'équipement, par exemple l'interruption de l'alimentation à l'issue d'une durée prédéterminée.

Par exemple, pour une installation comportant une pluralité de douches, la détection centralisée de l'activation d'une douche permet d'envoyer au circuit de commande de la douche concernée une information déclenchant la temporisation. Cette solution permet de simplifier la conception des vannes commandées, en évitant l'intégration d'un capteur de débit dans chacune des vannes.

## Revendications

1. Système pour l'estimation de la consommation d'eau individuelle d'une pluralité d'équipements alimentés par le réseau secondaire de distribution de fluide d'un utilisateur, **caractérisé en ce qu'**il comprend un manchon (1) apte à être monté autour de la canalisation d'alimentation dudit réseau secondaire, ledit manchon étant constitué par deux demi-coques tubulaires (3, 4) dont l'une comprend un capteur électromécanique passif appliqué contre la paroi extérieure de ladite canalisation d'alimentation pour l'acquisition de signaux intrinsèques émis par l'interaction d'un fluide avec un conduit dans lequel ledit fluide circule, lesdites demi-coques étant reliées entre elles par une articulation (5) permettant l'ouverture du manchon en vue de son insertion autour du conduit, et sa fermeture en vue de l'application dudit capteur électromécanique contre la paroi dudit conduit ainsi qu'un calculateur pour l'analyse des signaux délivrés par ledit capteur électromécanique passif en vue de l'extraction d'une information de caractérisation de la consommation individuelle d'une partie au moins des équipements alimentés par ledit réseau secondaire.

2. Système selon la revendication précédente **caractérisé en ce que** ledit manchon (1) comprend un moyen de transmission à distance des signaux délivrés par le capteur électromécanique.

3. Système selon la revendication 1 ou 2 **caractérisé en ce que** ledit manchon (1) comprend en outre un circuit électronique de prétraitement des signaux délivrés par le capteur électromécanique.

4. Système selon l'une quelconque des revendications précédentes **caractérisé en ce que** ledit calculateur est associé à une mémoire pour l'enregistrement d'une bibliothèque de signatures de consommation d'une partie au moins des équipements individuels.

5. Système selon l'une quelconque des revendications précédentes **caractérisé en ce que** ledit calculateur est programmé pour réaliser un traitement d'estimation et de classification à partir des signaux fournis par ledit capteur électromécanique.

6. Système selon l'une quelconque des revendications précédentes **caractérisé en ce que** ledit capteur électromécanique est constitué par un capteur accéléromètre MEMS ou un capteur piézoélectrique ou par un microphone électrets ou par un microphone MEMS.

7. Système selon l'une quelconque des revendications précédentes **caractérisé en ce qu'**il comporte en outre au moins une vanne commandant l'alimentation d'au moins un desdits équipements en fonction de ladite information de caractérisation de la consommation individuelle d'une partie au moins des équipements.

8. Système selon l'une quelconque des revendications précédentes **caractérisé en ce que** le manchon comporte un moyen d'ajustement de la pression d'appui du capteur sur la paroi extérieure du conduit.

9. Système selon l'une quelconque des revendications précédentes **caractérisé en ce que** le manchon comporte un connecteur pour recevoir un périphérique contenant une mémoire électronique dans laquelle est enregistré un fichier informatique de mise à jour du programme d'ordinateur commandant un calculateur pour l'analyse des signaux.

10. Procédé pour estimer la consommation d'eau individuelle d'une pluralité d'équipements, mettant en œuvre un système selon l'une au moins des revendications 1 à 9.

11. Programme d'ordinateur pour la mise en oeuvre d'un procédé selon la revendication 10 dans un système selon l'une au moins des revendications 1 à 9.

## Patentansprüche

1. System zum Abschätzen des individuellen Wasserverbrauchs mehrerer Geräte, die durch das sekundäre Flüssigkeitsverteilungsnetz eines Benutzers versorgt werden, **dadurch gekennzeichnet, dass** es eine Hülse (1) umfasst, die um die Versorgungsleitung des sekundären Netzes herum angebracht werden kann, wobei die Hülse aus zwei rohrförmigen Halbschalen (3, 4) besteht, von denen eine einen passiven elektromechanischen Sensor aufweist, der an der Außenwand der Versorgungsleitung angebracht ist, um intrinsische Signale zu erfassen, die durch die Wechselwirkung einer Flüssigkeit mit einer Leitung, in der die Flüssigkeit zirkuliert, abgegeben werden, wobei die Halbschalen durch ein Scharnier (5) miteinander verbunden sind, das es ermöglicht, die Hülse zum Einsetzen um die Leitung herum zu öffnen und zum Anbringen des elektromechanischen Sensors an der Wand der Leitung zu schließen, und einen Computer zum Analysieren der von dem passiven elektromechanischen Sensor gelieferten Signale, um Informationen zu extrahieren, die den individuellen Verbrauch von zumindest einem Teil der von dem sekundären Netz versorgten Geräte charakterisieren.

2. System nach dem vorhergehenden Anspruch, **dadurch gekennzeichnet, dass** die Hülse (1) Mittel zur Fernübertragung der von dem elektromechanischen Sensor gelieferten Signale umfasst.

3. System nach Anspruch 1 oder 2, **dadurch gekennzeichnet, dass** die Hülse (1) ferner eine elektronische Schaltung zur Vorverarbeitung der von dem elektromechanischen Sensor gelieferten Signale umfasst.

4. System nach einem der vorhergehenden Ansprüche, **dadurch gekennzeichnet, dass** dem Computer ein Speicher zum Speichern einer Bibliothek von Verbrauchssignaturen von zumindest einem Teil der einzelnen Geräte zugeordnet ist.

5. System nach einem der vorhergehenden Ansprüche, **dadurch gekennzeichnet, dass** der Computer so programmiert ist, dass er aus den vom elektromechanischen Sensor gelieferten Signalen eine Schätz- und Klassifikationsverarbeitung durchführt.

6. System nach einem der vorhergehenden Ansprüche, **dadurch gekennzeichnet, dass** der elektromechanische Sensor durch einen MEMS-Beschleunigungssensor oder einen piezoelektrischen Sensor oder durch ein Elektretmikrofon oder durch ein MEMS-Mikrofon gebildet ist.

7. System nach einem der vorhergehenden Ansprüche, **dadurch gekennzeichnet, dass** es ferner mindestens ein Ventil aufweist, das die Versorgung mindestens eines der Geräte in Abhängigkeit von den Informationen steuert, die den individuellen Verbrauch von zumindest einem Teil der Geräte charakterisieren.

8. System nach einem der vorhergehenden Ansprüche, **dadurch gekennzeichnet, dass** die Hülse Mittel zum Einstellen des Auflagedrucks des Sensors an der Außenwand der Leitung aufweist.

9. System nach einem der vorhergehenden Ansprüche, **dadurch gekennzeichnet, dass** die Hülse einen Anschluss zur Aufnahme eines Peripheriegeräts aufweist, das einen elektronischen Speicher enthält, in dem eine Computerdatei zum Aktualisieren des Computerprogramms, das einen Computer zur Signalanalyse steuert, gespeichert ist.

10. Verfahren zum Abschätzen des individuellen Wasserverbrauchs mehrerer Geräte, wobei ein System nach mindestens einem der Ansprüche 1 bis 9 eingesetzt wird.

11. Computerprogramm zum Implementieren eines Systems nach mindestens einem der Ansprüche 1 bis 10 zum Steuern eines Computers für die Analyse der von einem elektromechanischen Sensor gelieferten Signale, um Informationen zu extrahieren, die den individuellen Verbrauch von Geräten charakterisieren, die von einem sekundären Netz versorgt werden.

## Claims

1. System for estimating the individual water consumption of a plurality of apparatuses supplied by the secondary fluid distribution network of a user, **characterized in that** the system comprises a sleeve (1) suitable for being mounted around the supply pipe of said secondary network, said sleeve consisting of two tubular half-shells (3, 4), one of which comprises a passive electromechanical sensor applied against the outer wall of said supply pipe in order to acquire intrinsic signals emitted by the interaction of a fluid with a duct in which said fluid circulates, said half-shells being interconnected by a joint (5) which allows the sleeve to open in order to be inserted around the duct and to close in order to apply said electromechanical sensor against the wall of said duct, and a computer for analyzing signals delivered by said passive electromechanical sensor in order to extract information characterizing the individual consumption of at least some of the apparatuses supplied by said secondary network.

2. System according to the preceding claim, **characterized in that** said sleeve (1) comprises a means for remotely transmitting the signals delivered by the electromechanical sensor.

3. System according to either claim 1 or claim 2, **characterized in that** said sleeve (1) further comprises an electronic circuit for pre-processing the signals delivered by the electromechanical sensor.

4. System according to any of the preceding claims, **characterized in that** said computer is associated with a memory for saving a library of signatures of consumption of at least some of the individual apparatuses.

5. System according to any of the preceding claims, **characterized in that** said computer is programmed to carry out estimation and classification processing on the basis of the signals provided by said electromechanical sensor.

6. System according to any of the preceding claims, **characterized in that** said electromechanical sensor consists of a MEMS accelerometer sensor or a piezoelectric sensor or of an electret microphone or of a MEMS microphone.

7. System according to any of the preceding claims, **characterized in that** it further comprises at least one valve which controls the supply of at least one of said apparatuses according to said information characterizing the individual consumption of at least some of the apparatuses.

8. System according to any of the preceding claims, **characterized in that** the sleeve comprises a means for adjusting the contact pressure of the sensor on the outer wall of the duct.

9. System according to any of the preceding claims, **characterized in that** the sleeve comprises a connector for receiving a peripheral device containing an electronic memory in which a computer file for updating the computer program that controls a computer for analyzing signals is saved.

10. Method for estimating the individual water consumption of a plurality of apparatuses, implementing a system according to at least one of claims 1 to 9.

11. Computer program for implementing a system according to at least one of claims 1 to 10, for controlling a computer for analyzing signals delivered by an electromechanical sensor in order to extract information characterizing the individual consumption of the apparatuses supplied by a secondary network.
